**Europäisches Patentamt**

**European Patent Office**

**Office européen des brevets**

(11) Numéro de publication : **0 437 135 A1**

# (12) DEMANDE DE BREVET EUROPEEN

(21) Numéro de dépôt : **90403699.3**

(22) Date de dépôt : **20.12.90**

(51) Int. Cl.⁵ : **G11B 7/24**

(30) Priorité : **29.12.89 FR 8917430**

(43) Date de publication de la demande :
**17.07.91 Bulletin 91/29**

(84) Etats contractants désignés :
**DE GB NL**

(71) Demandeur : **THOMSON-CSF**
**51, Esplanade du Général de Gaulle**
**F-92800 Puteaux (FR)**

(72) Inventeur : **Maillot, Christian**
**THOMSON-CSF, SCPI, Cédex 67**
**F-92045 Paris la Défense (FR)**
Inventeur : **Meunier, Paul Louis**
**THOMSON-CSF, SCPI, Cédex 67**
**F-92045 Paris la Défense (FR)**
Inventeur : **Simon, Jacques**
**THOMSON-CSF, SCPI, Cédex 67**
**F-92045 Paris la Défense (FR)**
Inventeur : **Doppelt, Pascal**
**THOMSON-CSF, SCPI, Cédex 67**
**F-92045 Paris la Défense (FR)**

(74) Mandataire : **Ruellan-Lemonnier, Brigitte et al**
**THOMSON-CSF SCPI**
**F-92045 PARIS LA DEFENSE CEDEX 67 (FR)**

(54) **Milieu d'enregistrement optique inscriptible thermo-optiquement, procédé de réalisation d'un tel milieu, et support d'information utilisant ledit milieu.**

(57) La présente invention concerne un nouveau milieu d'enregistrement optique inscriptible thermo-optiquement.

Ce milieu 2a, 2b, 2c) est constitué par au moins un colorant donnant des agrégats de type J incorporé dans au moins un polymère ou copolymère ionique induisant l'agrégation, l'ensemble étant incorporé dans au moins un polymère ou copolymère filmogène transparent à la longueur d'onde d'absorption du ou des agrégats.

Ce nouveau milieu peut être utilisé pour réaliser des disques optiques de grande capacité de stockage.

## FIG_2

SUBSTRAT

# MILIEU D'ENREGISTREMENT OPTIQUE INSCRIPTIBLE THERMO-OPTIQUEMENT, PROCEDE DE REALISATION D'UN TEL MILIEU ET SUPPORT D'INFORMATIONS UTILISANT LEDIT MILIEU

La présente invention concerne un milieu d'enregistrement optique inscriptible thermo-optiquement ainsi qu'un procédé de réalisation dudit milieu. La présente invention concerne aussi un support d'informations mono ou multi-longueur d'onde inscriptible thermo-optiquement utilisant ledit milieu d'enregistrement.

Pour le stockage optique des données, différents supports d'informations ou disques sont aujourd'hui utilisés.

Ainsi dans le cas des compact-disques, les informations sont notamment enregistrées par pressage mécanique d'une couche sensible telle que du polycarbonate à partir d'une matrice gravée optiquement. Les informations sont alors représentées par une transition entre un creux et une absence de creux dans la couche gravée. Pour protéger le disque, contre les poussières ou les traces de doigts, la couche sensible est encapsulée sous une couche de polymère d'environ 1 millimètre d'épaisseur qui permet de placer hors focal la surface du polymère.

Dans le cas des disques optiques numériques enregistrables, notamment des disques "write once", le disque est alors constitué par un substrat sur lequel a été déposée une couche thermo-sensible qui peut être inscrite de différentes manières. Dans des modes de réalisation couramment utilisés, la couche sensible est inscrite par ablation thermique ou par changement de phase.

Dans les cas décrits ci-dessus, la densité du disque est limitée par l'optique à environ un bit par micron-carré. Si cette densité paraît être suffisante pour des applications audio, elle est en général insuffisante pour les applications vidéo-numériques et en particulier pour l'enregistrement de la télévision haute définition pour laquelle le débit d'informations est compris entre 20 et 100 Mbits/s. Il est donc nécessaire d'accroître la capacité des disques si on souhaite garder constant la durée totale d'enregistrement par disque. Pour remédier à cet inconvénient, la Société IBM a proposé dans le brevet américain N°4 101 976 un système de stockage optique des données sélectif en fréquence qui consiste à l'intérieur d'une raie d'absorption optique élargie d'une façon inhomogène par le désordre local, à brûler sélectivement des raies très fines. La densité d'un tel support dépend du nombre de raies brûlables dans la largeur inhomogène totale. Ce nombre décroît fortement avec la température et aucun gain n'est attendu à la température ambiante dans les matériaux connus tels que les porphyrines ou similaires.

Pour réaliser un enregistrement optique multi-longueur d'onde, on a aussi proposé dans l'article d'Applied Physics Letters 49(25) 1986, intitulé "Multiple Wavelength Optical recording using cyanine dye J aggregates in Langmuir-Blodgett films" d'utiliser des agrégats de type J dans des films de Langmuir-Blodgett. Toutefois, dans cet article, il est démontré la linéarité du mécanisme de blanchiment des agrégats en fonction de la puissance d'écriture. Or, une telle linéarité interdit un nombre important de relecture du disque, car chaque lecture dégrade le rapport signal à bruit par blanchiment de l'ensemble du disque. D'autre part, le disque doit être protégé de la lumière par une cassette opaque à la longueur d'onde d'écriture.

La présente invention a donc pour but de proposer un nouveau milieu d'enregistrement optique inscriptible thermo-optiquement qui permet de remédier aux inconvénients mentionnés ci-dessus.

La présente invention a aussi pour but de proposer un nouveau milieu d'enregistrement optique qui peut être exposé à la lumière et dont la lecture n'entraîne qu'une dégradation négligeable du rapport signal à bruit.

La présente invention a encore pour but de proposer un nouveau milieu d'enregistrement optique inscriptible thermo-optiquement qui permet un enregistrement multi-longueurs d'onde.

La présente invention a encore pour but de proposer un support d'informations mono ou multi-longueur d'onde qui soit compatible avec un lecteur de compact disque, un lecteur de disques optiques numériques du type "Write-Once" ou similaire.

En conséquence, la présente invention a pour objet un milieu d'enregistrement optique inscriptible thermo-optiquement, caractérisé en ce qu'il est constitué par au moins un colorant donnant des agrégats de type J incorporé dans au moins un polymère ou copolymère ionique induisant l'agrégation, l'ensemble étant incorporé dans au moins un polymère ou copolymère filmogène transparent à la longueur d'onde d'absorption du ou des agrégats.

Selon une autre caractéristique de la présente invention, si le colorant est choisi pour s'agréger directement dans le polymère ou copolymère filmogène, alors le polymère ou copolymère ionique et le polymère ou copolymère filmogène sont identiques.

Selon un mode de réalisation préférentiel de la présente invention, le polymère ou copolymère ionique est un polymère ou copolymère anionique lorsque le colorant est cationique et un polymère ou copolymère cationique lorsque le colorant est anionique.

De préférence, le colorant donnant des agrégats de type J est choisi parmi les cyanines, les polymères ou copolymères induisant l'agrégation sont choisis parmi le polyvinyle sulfate ou le polyacrylate de sodium et le polymère ou copolymère filmogène est constitué par l'alcool polyvinylique ou le PMMA partiellement hydrolisé.

La présente invention a aussi pour objet un procédé de réalisation d'un milieu d'enregistrement optique, caractérisé par les étapes suivantes :

– mélange du colorant avec au moins un polymère ou copolymère ionique induisant l'agrégation dans un solvant commun au colorant et au polymère ou copolymère ;

– incorporation des agrégats à au moins un polymère ou copolymère filmogène transparent à la longueur d'onde d'absorption du ou des agrégats, l'incorporation ayant lieu dans un solvant commun aux agrégats et au polymère ou copolymère. De préférence, le solvant est constitué par de l'eau.

La présente invention a encore pour objet un support d'informations mono ou multi-longueur d'onde inscriptible thermo-optiquement.

Conformément à la présente invention, le support d'informations mono-longueur d'onde inscriptible thermo-optiquement est caractérisé en ce qu'il est constitué par un substrat sur lequel a été déposée une couche active d'un milieu d'enregistrement optique tel que décrit ci-dessus, ledit milieu d'enregistrement comportant un colorant dont la longueur d'onde d'absorption correspond à la longueur d'onde d'inscription.

La présente invention concerne aussi un support d'informations multi-longueur d'onde inscriptible thermo-optiquement caractérisé en ce qu'il est constitué par un substrat sur lequel ont été déposées successivement plusieurs couches actives d'un milieu d'enregistrement optique tel que décrit ci-dessus, le milieu d'enregistrement de chaque couche comportant un colorant différent dont la longueur d'onde d'absorption correspond à l'une des longueurs d'onde d'inscription.

La présente invention concerne encore un support d'informations multilongueur d'onde inscriptible thermo-optiquement, caractérisé en ce qu'il est constitué par un substrat sur lequel a été déposée une couche active d'un milieu d'enregistrement optique tel que décrit ci-dessus, le milieu d'enregistrement comportant plusieurs colorants s'agrégeant dont la longueur d'onde d'absorption correspond à l'une des longueurs d'onde d'inscription.

Selon différentes caractéristiques de la présente invention, les couches actives sont des couches minces présentant une épaisseur de quelques milliers d'angström. D'autre part, le support d'informations comporte de plus une couche réflectrice. De plus, le support d'informations peut être recouvert d'une couche de protection transparente placée entre la couche active et la couche réflectrice.

D'autres caractéristiques et avantages de la présente invention apparaîtront à la lecture de la description de deux modes de réalisation donnés à titre d'exemple non limitatif, cette description étant faite ci-après avec référence aux dessins ci-annexés dans lesquels :

– la figure 1 est une vue en coupe schématique d'un support d'informations mono-longueur d'onde utilisant un milieu d'enregistrement conforme à la présente invention ;

– la figure 2 est une vue en coupe schématique d'un support d'informations multi-longueur d'onde utilisant un milieu d'enregistrement conforme à la présente invention, et

– la figure 3 représente deux courbes donnant le temps nécessaire pour faire décroître la densité d'un facteur 2 en fonction de la densité de puissance laser.

Pour simplifier la description, dans les dessins les mêmes éléments portent les mêmes références.

D'autre part, il est évident pour l'homme de l'art que les épaisseurs des différentes couches représentées n'ont rien à voir avec les épaisseurs réelles et n'ont été données qu'à titre illustratif.

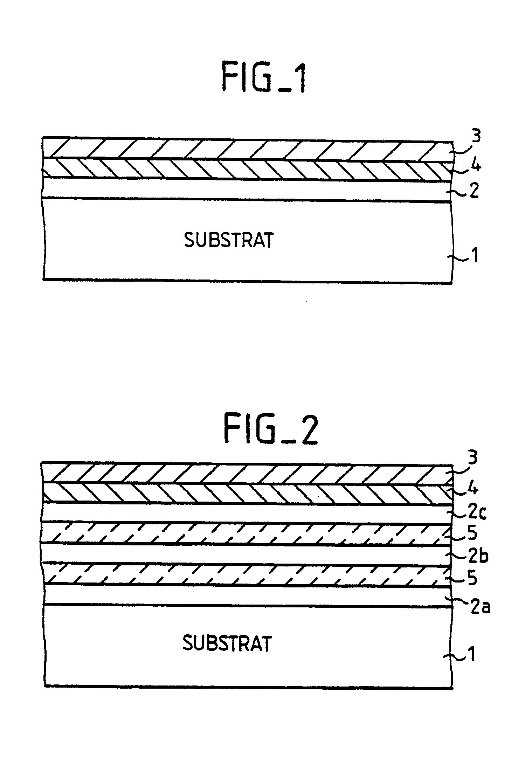

Sur la figure 1, on a représenté un support d'informations mono-longueur d'onde inscriptible thermo-optiquement. Comme représenté sur la figure 1, ce support d'informations est constitué essentiellement par un substrat 1 qui peut être réalisé en verre, en matière plastique ou similaire. Ce support est transparent aux longueurs d'ondes utilisées et présente de bonnes propriétés optiques (rugosité, planéité). Sur ce support, on a déposé un milieu d'enregistrement optique 2 conforme à la présente invention. Ce milieu d'enregistrement 2 a été déposé en couche mince en utilisant par exemple des techniques de dépôt à la tournette, par trempage ou toutes autres techniques de dépôt connues. Le milieu d'enregistrement ainsi déposé est constitué par un colorant donnant des agrégats de type J tels que les cyanines mélangées avec au moins un polymère ou un copolymère ionique induisant l'agrégation des cyanines dans un solvant commun aux colorants et aux polymères ou copolymères. La cyanine est choisie en fonction de sa capacité à s'agréger et de sa longueur d'onde d'absorption. Un exemple de cyanine s'agregeant est constitué par l'iodure 11-diethyl-22 cyanine qui présente un pic d'absorption de 8nm de large à mi-hauteur à 572nm. Le polymère ou copolymère qui induit l'agrégation de la cyanine en solution dans l'eau peut être choisi parmi le polyvinyl sulfate ou le polyacrylate de sodium. Les agrégats de cyanines ainsi obtenus sont ensuite incorporés dans au moins un polymère ou copolymère filmogène transparent à la longueur d'onde d'absorption de l'agrégat. Cette incorporation a lieu en solution dans un solvant commun aux agrégats et aux polymères. Un exemple de polymère ou copolymère filmogène est constitué par l'alcool polyvinylique ou par le PMMA partiellement hydrolisé. Dans ce cas, l'incorporation est réalisée dans l'eau.

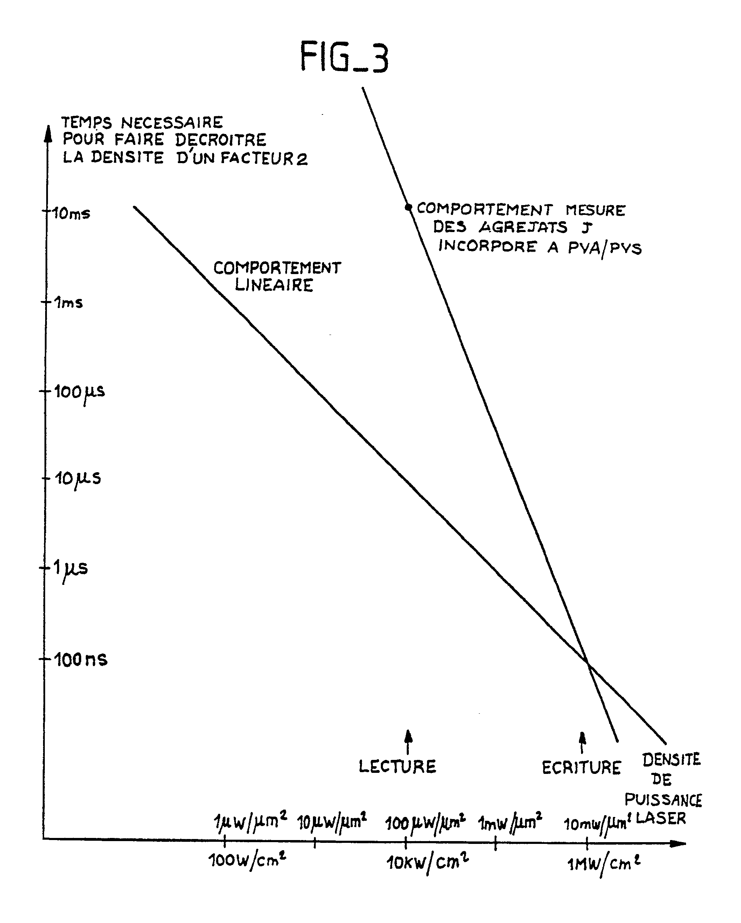

De plus, comme représenté sur la figure 1, sur la couche 2 du milieu d'enregistrement optique qui présente une épaisseur d'environ 1 micromètre, on a déposé une couche de protection transparente 4. Cette couche de protection est réalisée par exemple en PMMA et elle présente une épaisseur d'environ 1000 Å. Cette couche de protection réalise une protection mécanique de la couche active. Cette couche de protection 4 est recouverte d'une couche métallique 3 de manière à pouvoir réaliser la lecture du disque par réflexion. Dans ce cas, on a réalisé un disque optique mono-longueur d'onde. L'écriture du disque est réalisée en irradiant la couche active 2 sous une puissance supérieure aux environs du MW/cm², c'est-à-dire 10mW/µm² ce qui provoque une diminution de l'absorption à la longueur d'onde d'écriture, à savoir à 572nm dans ce cas. La lecture est réalisée par mesure de la modulation induite par le faisceau d'écriture. La puissance de lecture est choisie plus faible que l'écriture, mais suffisamment forte pour obtenir un bon rapport signal à bruit : 10 KW/cm², soit 100 µW/µm² apparaît un bon compromis. Si on se réfère à la figure 3 où les puissances d'écriture et de lecture sont représentées, on s'aperçoit que la caractéristique non linéaire du média conduit à ce que le temps nécessaire pour blanchir à la puissance de lecture soit $10^6$ fois plus important que le temps nécessaire pour écrire : $10^6$ lectures sont ainsi possibles.

Sur la figure 2, on a représenté un autre mode de réalisation d'un support d'informations inscriptible thermo-optiquement. Dans ce cas, il s'agit d'un support d'informations multi-longueur d'onde. Sur le substrat 1, l'on a déposé successivement plusieurs couches actives 2a, 2b, 2c constituées par un milieu d'enregistrement optique réalisé de la manière décrite ci-dessus. Dans ce cas, chaque couche 2a, 2b, 2c incorpore un agrégat de cyanine différent présentant un pic d'absorption à une longueur d'onde différente de manière à pouvoir enregistrer au même endroit une information dans chaque couche. Dans le mode de réalisation représenté, les couches actives sont séparées par une couche tampon 5 réalisée en PMMA et présentant une épaisseur de 1000 Å. Cette couche tampon a pour rôle d'assurer l'adhérence des couches actives entre elles. Les couches tampons permettent aussi d'avoir une meilleure indépendance d'écriture entre des couches actives absorbant des longueurs d'onde différentes. Comme représenté sur la figure 2, l'ensemble peut être revêtu d'une couche de protection transparente 4 identique à la couche 4 de la figure 1. La couche réflectrice 3 est ensuite déposée.

Un autre mode de réalisation d'un support d'information multi-longueur peut être obtenu en mélangeant dans la même couche active 2 plusieurs agrégats de cyanines présentant des pics d'absorption à des longueurs d'ondes différentes. Dans ce cas, la structure du disque est identique à la structure du disque de la figure 1.

Dans tous les cas, les agrégats choisis doivent être compatibles avec les diodes-laser utilisées pour l'écriture ou la lecture. Dans le cas d'un support d'informations ou disque multi-longueur d'onde, deux solutions sont envisageables au niveau de la source laser, soit une diode-laser accordable soit une matrice de diodes-laser de longueurs d'onde différentes.

Ainsi, la présente invention consiste à incorporer un agrégat de type J, plus particulièrement un agrégat de cyanine, dans un polymère ou copolymère filmogène transparent à la longueur d'ondes d'absorption du ou des agrégats. Il a été montré que cette incorporation confère au nouveau milieu d'enregistrement ainsi élaboré, la capacité d'être blanchie lorsque la puissance d'éclairement est supérieure à un seuil. De plus, à l'inverse des milieux d'enregistrement utilisant déjà des cyanines, le milieu de la présente invention présente une dépendance non linéaire du blanchiment en fonction de la puissance incidente, ce qui permet de nombreuses lectures sans détérioration du milieu. Si les puissances de lecture et d'écriture sont respectivement 1 MW/cm² et 10 KW/cm², $10^6$ lectures sont au moins possibles. D'autre part, le nouveau milieu d'enregistrement est sensible à plusieurs longueurs d'onde ce qui permet d'augmenter la densité d'informations stockables. Dans le cas d'un milieu d'enregistrement multi-longueur d'onde composé de l'empilement de plusieurs couches, chacune des couches est absorbable et blanchissable pour une plage de longueur d'onde et transparente dans le reste du spectre optique. La plage de sensibilité de chacune des couches est d'environ 10nm. Ainsi, une dizaine de couches peut être superposé tout en restant compatible avec les possibilités spectrales des diodes-laser. Ceci permet donc d'augmenter de manière importante la densité d'informations stockables.

En résumé, le nouveau milieu d'enregistrement optique inscriptible thermo-optiquement conforme à la présente invention présente de nombreux avantages, à savoir :

     – une plage étroite de sensibilité aux longueurs d'onde permettant un enregistrement multi-longueur d'onde ;

     – un mécanisme non linéaire de blanchiment des couches permettant d'exposer le milieu à la lumière et sa lecture sans dégradation du rapport signal à bruit ;

     – un mécanisme non ablatif de blanchiment permettant son encapsulation et donc sa protection ;

     – un faible coût potentiel des matériaux et des techniques de dépôt utilisés ;

     – une forte absorption des colorants utilisés assurant un bon rapport signal à bruit lors de la lecture ;

     – une adaptabilité en longueurs d'ondes des composés organiques par modification de leur structure moléculaire ;
– une compatibilité potentielle avec les lecteurs de compact disque ou autres types de lecteurs.

## Revendications

1. Milieu d'enregistrement optique inscriptible thermo-optiquement, caractérisé en ce qu'il est constitué par au moins un colorant donnant des agrégats de type J incorporé dans au moins un polymère ou copolymère ionique induisant l'agrégation, l'ensemble étant incorporé dans au moins un polymère ou copolymère filmogène transparent à la longueur d'onde d'absorption du ou des agrégats.

2. Milieu d'enregistrement optique selon la revendication 1, caractérisé en ce que le polymère ou copolymère ionique et le polymère ou copolymère filmogène sont identiques.

3. Milieu d'enregistrement optique selon la revendication 1, caractérisé en ce que le polymère ou copolymère ionique est un polymère ou copolymère anionique lorsque le colorant est cationique et un polymère ou copolymère cationique lorsque le colorant est anionique.

4. Milieu d'enregistrement optique selon la revendication 1, caractérisé en ce que le colorant donnant des agrégats de type J est choisi parmi les cyanines.

5. Milieu d'enregistrement optique selon la revendication 1, caractérisé en ce que le polymère ou copolymère induisant l'agrégation est choisi parmi le polyvinyl sulfate ou le polyacrylate de sodium.

6. Milieu d'enregistrement optique selon la revendication 1, caractérisé en ce que le polymère ou copolymère filmogène est constitué par l'alcool polyvinylique ou le PMMA partiellement hydrolisé.

7. Procédé de réalisation d'un milieu d'enregistrement optique selon l'une quelconque des revendications 1 à 6, caractérisé par les étapes suivantes :
    – mélange du colorant avec au moins un polymère ou copolymère ionique induisant l'agrégation dans un solvant commun au colorant et au polymère ou copolymère ;
    – incorporation des agrégats à au moins un polymère ou copolymère filmogène transparent à la longueur d'onde d'absorption du ou des agrégats, l'incorporation ayant lieu dans un solvant commun aux agrégats et au polymère ou copolymère.

8. Procédé selon la revendication 7, caractérisé en ce que le solvant est constitué par de l'eau.

9. Support d'informations monolongueur d'onde inscriptible thermo-optiquement, caractérisé en ce qu'il est constitué par un substrat sur lequel a été déposée une couche active d'un milieu d'enregistrement optique selon l'une quelconque des revendications 1 à 6, ledit milieu d'enregistrement comportant un colorant dont la longueur d'onde d'absorption correspond à la longueur d'onde d'inscription.

10. Support d'informations multi-longueur d'onde inscriptible thermo-optiquement, caractérisé en ce qu'il est constitué par un substrat sur lequel ont été déposées successivement plusieurs couches actives d'un milieu d'enregistrement optique selon l'une quelconque des revendications 1 à 6, le milieu d'enregistrement de chaque couche comportant un colorant différent dont la longueur d'onde d'absorption correspond à l'une des longueurs d'onde d'inscription.

11. Support d'informations multi-longueur d'onde inscriptible thermo-optiquement, caractérisé en ce qu'il est constitué par un substrat sur lequel a été déposée une couche active d'un milieu d'enregistrement optique selon l'une quelconque des revendications 1 à 6, le milieu d'enregistrement comportant plusieurs colorants s'agrégeant dont la longueur d'onde d'absorption correspond à l'une des longueurs d'onde d'inscription.

12. Support d'informations selon l'une quelconque des revendications 9 à 11, caractérisé en ce que les couches actives sont des couches minces présentant une épaisseur d'environ 1 micromètre.

13. Support d'information selon l'une quelconque des revendications 9 à 12, caractérisé en ce que la ou les couches actives sont recouvertes d'une couche de protection transparente.

14. Support d'information selon l'une quelconque des revendications 9 à 13, caractérisé en ce que la couche de protection est recouverte d'une couche réflectrice.

15. Support d'information selon la revendication 10, caractérisé en ce qu'il comporte une couche tampon déposée entre deux couches actives.

# FIG_1

3
4
2
SUBSTRAT
1

# FIG_2

3
4
2c
5
2b
5
2a
SUBSTRAT
1

# FIG_3

TEMPS NECESSAIRE
POUR FAIRE DECROITRE
LA DENSITE D'UN FACTEUR 2

10ms

1ms

100 μs

10 μs

1 μs

100 ns

COMPORTEMENT MESURE
DES AGREJATS J
INCORPORE A PVA/PVS

COMPORTEMENT
LINEAIRE

LECTURE

ECRITURE

DENSITE
DE
PUISSANCE
LASER

1μw/μm²    10μw/μm²    100μw/μm²    1mw/μm²    10mw/μm²

100W/cm²    10kW/cm²    1MW/cm²

Office européen
des brevets

# RAPPORT DE RECHERCHE EUROPEENNE

Numero de la demande

EP  90 40 3699

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-218263 (SONY CORPORATION)<br>* abrégé *<br>* page 3, ligne 8 - page 4, ligne 3 *<br>* page 4, ligne 20 - page 6, ligne 10 *<br>* page 6, ligne 24 - page 8, ligne 2 *<br>* revendications 1, 6-8; figures 1, 4 * | 1-4, 7, 9-14 | G11B7/24 |
| X | EP-A-193931 (MATSUSHITA ELECTRIC IND. CO. LTD.)<br>* abrégé *<br>* colonne 1, ligne 45 - colonne 2, ligne 39 *<br>* revendications 1, 2, 6, 7; figure 1 * | 1, 2, 4, 9-11 | |
| X | IBM TECHNICAL DISCLOSURE BULLETIN.<br>vol. 29, no. 10, mars 1987, NEW YORK US<br>page 4606<br>"Organic Media for Optical Recording."<br>* le document en entier * | 1, 9 | |
| A | | 5, 6 | |

| DOMAINES TECHNIQUES RECHERCHES (Int. Cl.5) |
|---|
| G11B |

Le présent rapport a été établi pour toutes les revendications

| Lieu de la recherche | Date d'achèvement de la recherche | Examinateur |
|---|---|---|
| LA HAYE | 18 AVRIL 1991 | BENFIELD A.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0401)